# EUROPEAN PATENT SPECIFICATION

(11) **EP 3 393 313 B1**
(45) Date of publication and mention of the grant of the patent: **31.07.2019**
(21) Application number: 16820215.8
(22) Date of filing: 15.12.2016
(51) Int. Cl.: A47J 31/58, A47J 31/047

(54) **HEATER ASSEMBLY FOR USE IN A DOMESTIC APPLIANCE**
HEIZERANORDNUNG ZUR VERWENDUNG IN EINEM HAUSHALTSGERÄT
ENSEMBLE CHAUFFANT DESTINÉ À ÊTRE UTILISÉ DANS UN APPAREIL MÉNAGER

(30) Priority: 23.12.2015 EP 15202434
(43) Date of publication of application: 31.10.2018
(73) Proprietor: Koninklijke Philips N.V., 5656 AE Eindhoven (NL)
(72) Inventor: TIBBE, Tim Gerard, 5656 AE Eindhoven (NL); RIJSKAMP, Peter, 5656 AE Eindhoven (NL)
(74) Representative: de Vries, Janna
(86) International application number: PCT/EP2016/081107
(87) International publication number: WO 2017/108554

(56) References cited:
- EP-A1- 1 083 811
- WO-A2-2009/046550
- CN-A- 104 188 519
- FR-A1- 2 782 257
- US-A1- 2015 233 602

## Description

### FIELD OF THE INVENTION

The invention relates to a heater assembly for use in a domestic appliance, comprising a main part being generally cup-shaped and having an open side, and a cover part which is fixedly connected to the main part for covering the open side of the main part, the main part and the cover part enclosing a heater space for receiving fluid to be heated in the heater assembly, and the main part and the cover part being sealingly coupled to each other in a sealing area which is at a position for surrounding the heater space. The invention also relates to a domestic appliance, comprising a heater assembly as mentioned for heating fluid.

### BACKGROUND OF THE INVENTION

In the field of domestic appliances using fluid and heating fluid in the process, such as coffee makers and steam irons, it is common use to equip the domestic appliance with a heater assembly having a heater space for receiving the fluid to be heated. One well-known example of such a heater assembly is a boiler assembly which is suitable for heating batches of fluid. Another well-known example of such a heater assembly is a flow through heater assembly which is suitable for heating flows of fluid.

The invention particularly relates to a heater assembly which is assembled from at least two parts, namely a main part being generally cup-shaped and having an open side, and a cover part which is fixedly connected to the main part for covering the open side of the main part, wherein the main part and the cover part have a function in enclosing the heater space of the heater assembly. In order to avoid leakage from the heater space, and possibly also to enable a situation in which pressure gets built up in the heater space to some predetermined value, the main part and the cover part are sealingly coupled to each other in a sealing area which is at a position for surrounding the heater space. In practical cases, an annular sealing element such as an O ring may be applied in the heater assembly, and the main part may comprise an outwardly bent flange at a level of the open side thereof, wherein the annular sealing element is positioned in the sealing area, which is an annular area on the flange of the main part in that case, covered by an annular portion of the cover part, one portion of the annular sealing element contacting the main part, and another portion of the annular sealing element contacting the cover part. Furthermore, the heater assembly normally comprises an inlet for letting in to the heater space fluid to be heated, and an outlet for letting out from the heater space hot fluid and/or possible gases/vapors obtained during operation of the heater assembly, as a result of the fluid heating process and/or as a result of chemical processes. An example of such a heater assembly is disclosed in US2015/0233602A1.

When the heater assembly is used for heating water, for example, gas is generated inside the heater space. If a blockage is present at the outlet of the heater space or further downstream of the heater space, it happens that the pressure inside the heater space is built up to an undesirable high value. The pressure may eventually get so high that the main part and the cover part are pushed apart, wherein the sealed coupling between the main part and the cover part is lost. At the very moment that the main part and the cover part are separated from each other under the influence of the high pressure, the pressure drops instantly and a sudden expansion may take place as a consequence thereof. Obviously, such a situation is dangerous and should be avoided.

According to the art, in order to prevent high pressure from separating the main part and the cover part from each other, a safety valve is used. A regular safety valve has a fixed nominal opening pressure, but the fact is that production factors cause variation on that pressure. Furthermore, the separation pressure of the connection between the main part and the cover part also has a spread around an average value. On the basis of the combination of the two spreads, it is impossible to find a safety valve of which the Gaussian distribution does not interfere with, on the one hand, a maximum operation pressure of a pump which is normally used with the heater assembly for pumping the fluid to be heated, and, on the other hand, the separation pressure.

### SUMMARY OF THE INVENTION

It is an object of the invention to provide a composed heater assembly for use in a domestic appliance, which is safe and reliable, the risk of a hazardous pressure situation occurring in case of a blockage at the outlet of the heater space or further downstream of the heater space being practically reduced to zero. In view of this object, according to the invention, a heater assembly for use in a domestic appliance is provided, particularly a heater assembly comprising a main part being generally cup-shaped and having an open side, and a cover part which is fixedly connected to the main part for covering the open side of the main part, the main part and the cover part enclosing a heater space for receiving fluid to be heated in the heater assembly, and the main part and the cover part being sealingly coupled to each other in a sealing area which is at a position for surrounding the heater space, wherein, at a position which is more to the outside of the heater assembly than the sealing area, as seen from the heater space, the heater assembly is provided with at least one safety opening for allowing fluidum from the heater space to flow therethrough in a forced safety condition of the heater assembly in which condition at least one fluidum passage is present between the main part and the cover part in the sealing area.

It follows from the foregoing definition that in the heater assembly according to the invention, at least one safety opening is present, which opening is suitable for allowing fluidum to pass, wherein it is noted that the term fluidum should be understood such as to include fluids, gases, vapors, etc. In a normal, operational condition of the heater assembly, the presence of the safety opening does not influence the operation of the heater assembly in any way, due to the fact that the position of the safety opening is chosen such as to be more to the outside of the heater assembly than the sealing area, as seen from the heater space. Thus, in the normal, operational condition of the heater assembly, fluidum from the heater space is prevented from reaching the safety opening due to the fact that a barrier between the heater space and the safety opening is present in the sealing area where the main part and the cover part are sealingly coupled to each other. In case an annular sealing element such as an O ring as mentioned earlier is applied in the sealing area, the barrier as mentioned is constituted by that sealing element, in an elastic manner so as to allow for pressure variations in the heater space in a normal, operational range. However, in a forced safety condition of the heater assembly, which is a condition in which at least one fluidum passage is present between the main part and the cover part in the sealing area, fluidum from the heater space is capable of reaching the safety opening after all, and may be discharged in a defined and gradual manner through that opening, as an advantageous result of which there is practically no longer any risk of a hazardous pressure situation.

In conventional situations, as explained in the foregoing, a safety valve is used in the heater assembly, which opens at a certain pressure level that actually cannot be known in individual cases. Contrariwise, when the invention is put to practice, a safety opening is always in an open condition, and is addressed as soon as the sealed coupling between the main part and the cover part is lost. Consequently, there is an advantageous relation between the separation pressure of a heater assembly and a pressure level at which safety measures are addressed/activated. If the separation pressure is relatively low in a certain case, there is a need for relatively early activation of the safety measures, which is fulfilled on the basis of the fact that the safety measures are activated as soon as the relatively low separation pressure has been reached, and if the separation pressure is relatively high in a certain case, it is possible to have activation of the safety measures at a later stage, which is realized on the basis of the fact that the safety measures are only activated as soon as the relatively high separation pressure has been reached. Hence, the process of separation of the main part and the cover part and the process of providing an opening through which fluidum is allowed to escape are directly linked to each other, under all circumstances and independent of the exact value of the separation pressure in an individual case. In this way, the problems known from the art, caused by spread of both the separation pressure and the valve opening pressure, are alleviated. According to the invention, there is no need for the safety opening to be closeable, as in the normal, operational condition of the heater assembly, access to the safety opening is prohibited on the basis of the fact that the main part and the cover part are sealingly coupled to each other in the sealing area. Implementation of the invention in a heater assembly does not need to involve additional manufacturing costs, as it is very well possible to integrate the creation of one or more safety openings at appropriate places in the heater assembly in the manufacturing process of the heater assembly without needing to adapt production steps on a principal level or add production steps.

For the sake of completeness, it is noted that the forced safety condition as mentioned in the foregoing is an actual condition of the heater assembly as soon as the sealed coupling between the main part and the cover part in the sealing area is no longer intact. With reference to the above explanation of the situation in which the main part and the cover part are separated from each other due to a pressure prevailing inside the heater space reaching a level of a separation pressure, it is clear that the forced safety condition is obtained as soon as the level of the separation pressure is reached. In general, the safety condition as mentioned may be realized due to (local) deformation of the main part and/or the cover part, and possibly also due to an actual outward displacement of the main part and the cover part with respect to each other. Furthermore, the heater assembly may be designed such that the deformation of the main part and/or the cover part, and possibly also of any sealing element being present between the main part and the cover part is of an elastic nature, in which case it is possible for the heater assembly to return to the normal, operational condition from the safety condition, which does not alter the fact that it is also possible to have a design of the heater assembly in which plastic deformation of one or more parts/elements may take place prior to the heater assembly assuming the safety condition.

It follows from the foregoing that when the invention is applied, at least one safety opening is provided in a heater assembly, and that particularly, the at least one safety opening is located more to the outside of the heater assembly than the sealing area, as seen from the heater space. Advantageously, the position of the at least one safety opening is one of a position in the main part, a position in the cover part, and a position between the main part and the cover part. In fact, the at least one safety opening can be present at any position in the heater assembly, as long as it is a position beyond the sealing area, as seen from the heater space.

Advantageously, the at least one safety opening is arranged for providing direct access to free space outside of the heater assembly. In such a case, the safety opening can be very effective in discharging pressurized fluidum from the heater space in the safety condition of the heater assembly. That does not alter the fact that alternative arrangements of the at least one safety opening are feasible within the framework of the invention, for example, an arrangement in which the at least one safety opening provides direct access to some system for transporting the fluidum away from the safety opening to a defined space for collecting the fluidum, or an arrangement in which the at least one safety opening is open to such a defined space.

In case the position of the at least one safety opening is a position in the cover part, it is practical for the at least one safety opening to be provided as a hole in the cover part, particularly as a hole which is positioned beyond a portion of the cover part associated with the sealing area, as seen from a central axis of the cover part. In case the position of the at least one safety opening is a position in the main part, it is practical for the at least one safety opening to be provided as a hole in the main part, particularly as a hole which is positioned beyond a portion of the main part associated with the sealing area, as seen from a central axis of the main part.

It is very practical for the main part to have an outwardly bent flange at a level of the open side thereof. In such a case, it may be so that a portion of the flange is associated with the sealing area, and that the at least one safety opening is provided as a hole in the flange, the hole being positioned beyond the portion of the flange associated with the sealing area, as seen from the central axis of the main part. According to another feasible option in such a case, a portion of the cover part is arranged for covering an outer edge of the flange, wherein, at least in one peripheral area along the outer edge of the flange, a space between the outer edge of the flange and the portion of the cover part covering the outer edge is locally enlarged for forming the at least one safety opening at a position between the main part and the cover part. For example, it may be so that a diameter of the outer edge of the flange of the main part is locally reduced at the position where the space between the outer edge of the flange and the portion of the cover part covering the outer edge is locally enlarged.

In the case that the main part has an outwardly bent flange as mentioned in the foregoing, and a portion of the cover part is arranged for covering an outer edge of the flange, it is possible for the heater assembly to comprise a single safety opening at a position between the main part and the cover part, particularly a safety opening which is provided in the form of an annular space which is present between the outer edge of the flange and the portion of the cover part covering the outer edge. Hence, in such a case, the safety opening has an annular shape and is positioned so as to surround the flange of the main part, while being delimited by the cover part.

Within the framework of the invention, it is practical option for the heater assembly to comprise at least one group of at least two safety openings which are located in a similar peripheral area of the heater assembly, wherein the position of one of the safety openings of a group is one of a position in the main part, a position in the cover part, and a position between the main part and the cover part, and wherein the position of another of the safety openings of the same group is another of a position in the main part, a position in the cover part, and a position between the main part and the cover part. Applying at least two safety openings in at least one group at a particular peripheral area may be particularly advantageous when the heater assembly comprises a sealing element which is arranged between the main part and the cover part in the sealing area. In the safety condition of the heater assembly, it may happen that the sealing element is deformed due to pressure differences in such a way that a portion of the sealing element ends up in one of the at least two safety openings. However, due to the presence of at least one other safety opening, it is still possible to have the necessary discharge of fluidum from the heater space, which would not be the case if only one safety opening would be applied at a particular peripheral area.

As mentioned in the foregoing, it is not necessary for the main part and the cover part to be in direct contact with each other in the sealing area. Instead, it is a feasible option for the heater assembly to be equipped with an annular sealing element which is positioned in the sealing area, one portion of the annular sealing element contacting the main part, and another portion of the annular sealing element contacting the cover part. Furthermore, it is possible for the main part and the cover part to be joined in a crimp connection. To that end, it is practical if the main part comprises the outwardly bent flange as mentioned in the foregoing, in which case an outer peripheral portion of the cover part may be arranged such as to be bent around the flange. In this respect, it is noted that a suitable material for the main part is a plastic material, while a suitable material for the cover part is a metal material, which does not alter the fact that within the framework of the invention, other types of material are possible as well.

The invention relates to a heater assembly for heating fluid as described in the foregoing, and also relates to a domestic appliance comprising such a heater assembly. Examples of such a domestic appliance include appliances for making hot beverages, food steamers, steam irons, steam cleaners and face steamers. The heater assembly may be arranged so as to serve as a boiler assembly or as a flow through heater assembly in such a domestic appliance, whatever is applicable in a given situation. It is practical for the heater assembly of a domestic appliance to be connected to a system for transporting fluid to an inlet of the heater assembly, and to furthermore be connected to a system for transporting hot fluid and/or possible gases/vapors obtained during operation of the heater assembly away from an outlet of the heater assembly, to another functional component of the domestic appliance or to outside of the domestic appliance.

The above-described and other aspects of the invention will be apparent from and elucidated with reference to the following detailed description of an embodiment of a heater assembly for use in a coffee maker. The embodiment is just one example out of numerous possible embodiments existing within the framework of the invention.

### BRIEF DESCRIPTION OF THE DRAWINGS

The invention will now be explained in greater detail with reference to the figures, in which equal or similar parts are indicated by the same reference signs, and in which:
Fig. 1 diagrammatically shows a coffee maker comprising a heater assembly for heating water;
Fig. 2 shows a perspective side view of a heater assembly according to an embodiment of the invention;
Fig. 3 diagrammatically shows a sectional view of a portion of the heater assembly, comprising a main part, a cover part connected to the main part, and an O ring through which the main part and the cover part are sealingly coupled to each other, wherein a mutual positioning of the main part, the cover part and the O ring as shown is associated with a normal, operational condition of the heater assembly;
Fig. 4 diagrammatically shows a sectional view of the portion of the heater assembly as shown in Fig. 3, wherein a mutual positioning of the main part, the cover part and the O ring as shown is associated with a safety condition of the heater assembly; and
Fig. 5 diagrammatically shows a top view of the main part of the heater assembly.

### DETAILED DESCRIPTION OF THE EMBODIMENTS

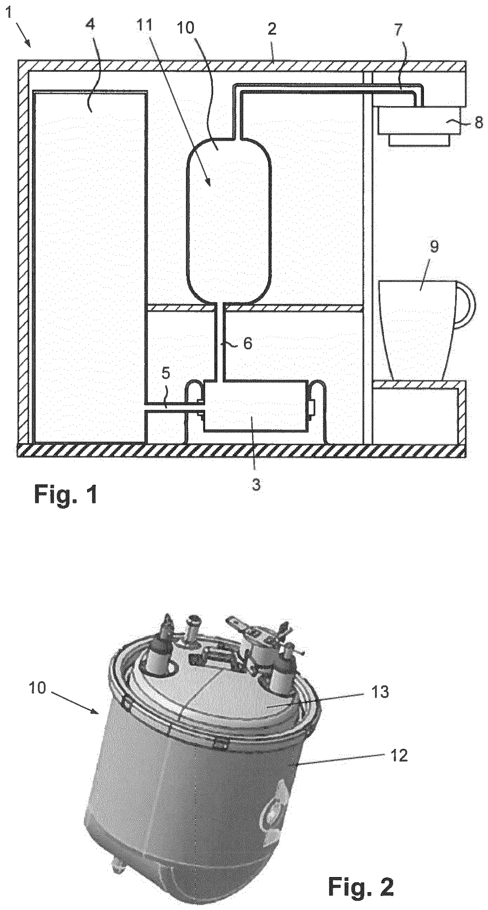

The invention relates to a heater assembly which is designed to heat fluid, and which is suitable for use in a domestic appliance. A coffee maker is a feasible example of a domestic appliance in which it is practical to have the heater assembly according to the invention. In the following, a general description of the way in which a heater assembly is operated in the context of a coffee maker is given on the basis of Fig. 1. Details of a heater assembly according to an embodiment of the invention are identified and discussed on the basis of Figs. 2-5.

Fig. 1 diagrammatically shows a coffee maker 1, comprising a heater assembly 10 for heating water, and also comprising a housing 2, a pump 3, and a water reservoir 4, which is mounted in the housing 2 in the shown example, an outlet of the water reservoir 4 being connected to an inlet of the pump 3 via a first tube 5. The water reservoir 4 may be detachably mounted at the housing 2 to facilitate easy refilling. An inlet of the heater assembly 10 is connected to an outlet of the pump 3 via a second tube 6. An outlet of the heater assembly 10 is connected via a third tube 7 to a coffee pad holder unit 8 for brewing and dispensing coffee. A cup 9 for receiving coffee from the coffee maker 1 is also shown in Fig. 1, at a position underneath the pad holder unit 8.

Operation of the coffee maker 1 involves activation of the pump 3 and activation of the heater assembly 10, the pump 3 having a function in controlling displacement of water through the coffee maker 1, and the heater assembly 10 having a function in heating the water prior to being transported to the pad holder unit 8. In general, the heater assembly 10 has a heater space 11 for accommodating a quantity of the water, and also has one or more heating elements (not shown) for providing heat to be transmitted to water in the heater space 11.

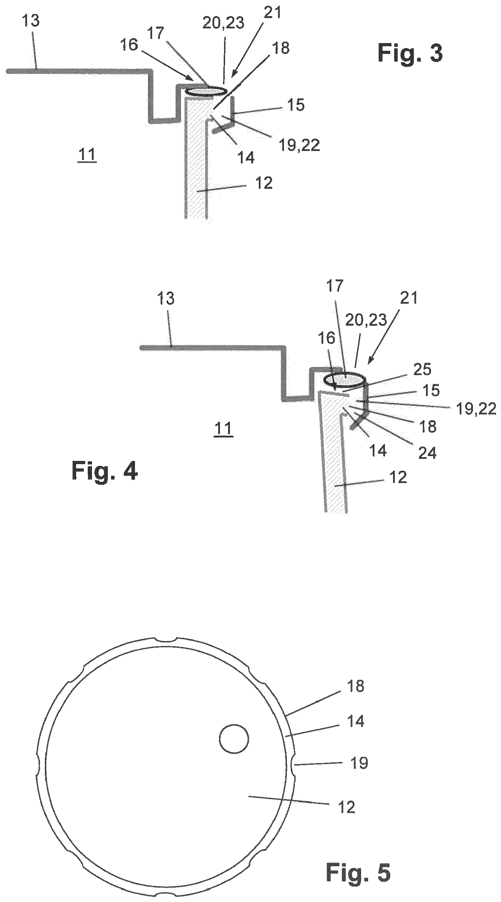

In the field of heater assemblies for use in a coffee maker and other domestic appliances, it is a commonly known to have a composed configuration of the heater assembly 10. In particular, it is commonly known for the heater assembly to comprise a main part 12 which is generally cup-shaped, and which has an open side, and to also comprise a cover part 13 which is fixedly connected to the main part 12 for covering the open side of the main part 12, the heater space 11 of the heater assembly 10 being enclosed by the main part 12 and the cover part 13 as mentioned. The invention relates to such a type of heater assembly. In Fig. 2, a perspective side view of a heater assembly 10 according to an embodiment of the invention is diagrammatically shown. Both Figs. 3 and 4 diagrammatically show a sectional view of a portion of the heater assembly 10, particularly a portion where the main part 12 and the cover part 13 are connected to each other. Fig. 5 diagrammatically shows a top view of the main part 12 only. For the sake of completeness, it is noted that the orientation of the heater assembly 10 and the parts 12, 13 thereof as shown in Fig. 2 is a normal, operational orientation, and that, for the sake of clarity, the normal, operational orientation is implicit in the following explanation of features of the heater assembly 10, which does not alter the fact that the invention is not restricted to any kind of orientation of the heater assembly 10.

In the shown example, both the main part 12 and the cover part 13 have a circular periphery about a central axis extending in a substantially vertical direction, and the cover part 13 is arranged on top of the main part 12. The main part 12 comprises an outwardly bent flange 14 at a level of the open side thereof, which is a top level in the normal, operational orientation of the heater assembly 10. The cover part 13 is fixedly connected to the main part 12. In the embodiment of the heater assembly 10 which is the subject of Figs. 2-5, the main part 12 and the cover part 13 are joined in a crimp connection, wherein an outer peripheral portion 15 of the cover part 13 is folded about the flange 14 of the main part 12, as it were, as shown best in Figs. 3 and 4. In this context, it is noted that the main part 12 may be made of a plastic material, and that the cover part 13 may be made of a metal material. However, another type of connection between the main part 12 and the cover part 13 and/or other types of material of the main part 12 and the cover part 13 are feasible within the framework of the invention as well.

In order to guarantee proper functioning of the heater assembly 10 in a normal, operational condition thereof, the main part 12 and the cover part 13 are sealingly coupled to each other in a sealing area 16 which is at a position for surrounding the heater space 11. In principle, it is possible for the main part 12 and the cover part 13 to be in direct contact with each other in that sealing area 16, but it is also possible to have an annular sealing element, for example, an O ring 17 as shown, in which case the main part 12 and the cover part 13 are sealingly coupled to each other through that sealing element, wherein the position of the sealing element in the normal, operational condition of the heater assembly 10 defines the position of the sealing area 16. Fig. 3, which relates to the normal, operational condition of the heater assembly 10, clearly demonstrates that the O ring 17 is supported by the flange 14 of the main part 12 and is covered by a portion of the outer peripheral portion 15 of the cover part 13. In this configuration, a bottom side of the O ring 17 contacts the main part 12 and a top side of the O ring 17 contacts the cover part 13.

Fig. 5 illustrates the fact that in the embodiment of the heater assembly 10 as shown, an outer edge 18 of the flange 14 of the main part 12 is provided with notches 19. In the shown example, the notches 19 are evenly distributed along the circular periphery of the flange 14, the number of notches 19 being eight in this example. In the same peripheral areas of the heater assembly 10 as those where the notches 19 are present, the cover part 13 is provided with holes 20. The section which is the basis of the sectional views of Figs. 3 and 4 is taken at the position of one of the notches 19, and therefore, these figures also show one of the holes 20. Both the notches 19 and the holes 20 are positioned more to the outside of the heater assembly 10 than the sealing area 16, as seen from the heater space 11, i.e. more downstream of the heater space 11 than the sealing area 16, assuming a fluidum flow originating from the heater space 11.

It follows from the foregoing that the heater assembly 10 according to the embodiment which is the subject of Figs. 2-5 comprises groups 21 of openings 22, 23 which will hereinafter be referred to as safety openings 22, 23, the groups 21 of openings 22, 23 being evenly distributed along the periphery of the heater assembly 10, and the number of groups 21 being eight. In particular, each group 21 of safety openings 22, 23 comprises a primary safety opening 22 which is located between the main part 12 and the cover part 13 at the position of a notch 19 in the outer edge 18 of the flange 14 of the main part 12, and a secondary safety opening 23 which is located in the cover part 13 at the position of a hole 20 in the cover part 13. In the normal, operational condition of the heater assembly 10 as illustrated in Fig. 3, the groups 21 of safety openings 22, 23 are blocked from communication to the heater space 11 by the O ring 17 and are not addressed in any way. However, in another possible condition of the heater assembly 10 as illustrated in Fig. 4, which is referred to as safety condition, the presence of the groups 21 of safety openings 22, 23 is very advantageous when it comes to avoiding dangerous situations, as will now be explained.

In exceptional practical situations, it may happen that pressure builds up in the heater space 11 and eventually gets so high that the cover part 13 is deformed and pushed away from the main part 12, causing the heater assembly 10 to be in another condition than the normal, operational condition, namely the safety condition. Such exceptional practical situations include situations in which the heater assembly 10 is operated while the outlet of the heater assembly 10 is blocked for some reason. As vapor is not allowed to escape from the heater space 11 in such situations, the pressure prevailing inside the heater space 11 gets higher and higher until a transition from the normal, operational condition to the safety condition is invoked, wherein the sealed coupling between the main part 12 and the cover part 13 is lost. If it were not for the presence of the safety openings 22, 23, an instant pressure drop might occur and sudden expansion might take place as a result of that process. However, the safety openings 22, 23 allow for a safety condition involving a defined passage for the vapor (or more in general, the fluidum) flowing from the heater space 11 to outside of the heater assembly 10, so that the pressure drop may be of a gradual nature rather than an instant nature. In particular, in the shown example, it happens that the O ring 17 ends up in a position for blocking the secondary safety openings 23 as a result of the pressure difference prevailing across those openings 23 at the moment the sealed coupling between the main part 12 and the cover part 13 is lost. Still, the fluidum flowing from the heater space 11 is capable of escaping from the heater space 11, namely through safety passages 24 at various peripheral positions, comprising space 25 between the O ring 17 and the flange 14 of the main part 12, which is available due to the fact that the O ring 17 has been lifted somewhat towards the secondary safety openings 23, and further comprising a primary safety opening 22. Thus, when the sealed coupling between the main part 12 and the cover part 13 is removed under the influence of a relatively high pressure prevailing inside the heater space 11, fluidum flowing out of the heater space 11 and passing the sealing area 16 is discharged in a controlled and gradual manner from the heater assembly 10 through safety passages 24 which are evenly distributed along the periphery of the heater assembly 10, each of the safety passages 24 comprising a primary safety opening 22 and space 25 at the position of the sealing area 16 upstream of the primary safety opening 22, which space 25 is obtained as soon as the sealed coupling between the main part 12 and the cover part 13 is lost and the O ring 17 is displaced towards the secondary safety opening 23 under the influence of the pressure difference prevailing across that opening 23 in that situation.

Within the framework of the invention, it is not essential to use groups 21 comprising two safety openings 22, 23 as described in the foregoing. Depending on whether a sealing element such as an O ring 17 is applied or not, and depending on the design of both the possible sealing element and the area comprising the sealing area 16 and the associated portions of the main part 12 and the cover part 13, it may be sufficient to have only one safety opening per peripheral area where a safety passage is supposed to open up as soon as the heater assembly 10 is forced to the safety condition under the influence of relatively high pressure prevailing inside the heater space 11.

The heater assembly 10 may be designed in such a way that the formation of the safety passages 25 in the transition from the normal, operation to the safety condition takes place in an elastic, reversible way, so that when the pressure prevailing in the heater space 11 has dropped to a normal level, the heater assembly 10 is capable of automatically returning to the normal, operational condition. However, it is also possible for the heater assembly 10 to be designed in such a way that the deformation of at least the cover part 13 which is associated with the transition from the normal, operation condition to the safety condition is a plastic deformation, in which case it is not possible for the heater assembly 10 to automatically return to the normal, operational condition after a safety condition has occurred.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The term "comprise" as used in this text will be understood by a person skilled in the art as covering the term "consist of'. Hence, the term "comprise" may in respect of an embodiment mean "consist of', but may in another embodiment mean "contain/include at least the defined species and optionally one or more other species".

A possible summary of the invention reads as follows. A heater assembly 10 for use in a domestic appliance 1 comprises a main part 12 and a cover part 13 fixedly connected to the main part 12, the parts 12, 13 enclosing a heater space 11 of the heater assembly 10. The parts 12, 13 are sealingly coupled to each other in a sealing area 16 which is at a position for surrounding the heater space 11, wherein, at a position which is more to the outside of the heater assembly 10 than the sealing area 16, as seen from the heater space 11, the heater assembly 10 is provided with at least one safety opening 22, 23, advantageously at a position in one of the parts 12, 13 or between the parts 12, 13, for allowing fluidum from the heater space 11 to flow therethrough in a forced safety condition of the heater assembly 10 in which condition at least one fluidum passage is present between the parts 12, 13 in the sealing area 16.

## Claims

1. Heater assembly (10) for use in a domestic appliance (1), comprising a main part (12) being generally cup-shaped and having an open side, and a cover part (13) which is fixedly connected to the main part (12) for covering the open side of the main part (12), the main part (12) and the cover part (13) enclosing a heater space (11) for receiving fluid to be heated in the heater assembly (10), and the main part (12) and the cover part (13) being sealingly coupled to each other in a sealing area (16) which is at a position for surrounding the heater space (11), **characterized in that**, at a position which is more to the outside of the heater assembly (10) than the sealing area (16), as seen from the heater space (11), the heater assembly (10) is provided with at least one safety opening (22, 23) for allowing fluidum from the heater space (11) to flow therethrough in a forced safety condition of the heater assembly (10) in which condition at least one fluidum passage is present between the main part (12) and the cover part (13) in the sealing area (16).

2. Heater assembly (10) according to claim 1, wherein the position of the at least one safety opening (22, 23) is one of a position in the main part (12), a position in the cover part (13), and a position between the main part (12) and the cover part (13).

3. Heater assembly (10) according to claim 1 or 2, wherein the at least one safety opening (22, 23) is arranged for providing direct access to free space outside of the heater assembly (10).

4. Heater assembly (10) according to any of claims 1-3, wherein the at least one safety opening (22, 23) is provided as a hole (20) in the cover part (13), the hole (20) being positioned beyond a portion of the cover part (13) associated with the sealing area (16), as seen from a central axis of the cover part (13).

5. Heater assembly (10) according to any of claims 1-3, wherein the at least one safety opening (22, 23) is provided as a hole in the main part (12), the hole being positioned beyond a portion of the main part (12) associated with the sealing area (16), as seen from a central axis of the main part (12).

6. Heater assembly (10) according to any of claims 1-3, wherein the main part (12) has an outwardly bent flange (14) at a level of the open side thereof, wherein a portion of the flange (14) is associated with the sealing area (16), and wherein the at least one safety opening (22, 23) is provided as a hole in the flange (14), the hole being positioned beyond the portion of the flange (14) associated with the sealing area (16), as seen from a central axis of the main part (12).

7. Heater assembly (10) according to any of claims 1-3, wherein the main part (12) has an outwardly bent flange (14) at a level of the open side thereof, wherein a portion (15) of the cover part (13) is arranged for covering an outer edge (18) of the flange (14), and wherein, at least in one peripheral area along the outer edge (18) of the flange (14), a space between the outer edge (18) of the flange (14) and the portion (15) of the cover part (13) covering the outer edge (18) is locally enlarged for forming the at least one safety opening (22, 23) at a position between the main part (12) and the cover part (13).

8. Heater assembly (10) according to claim 7, wherein a diameter of the outer edge (18) of the flange (14) of the main part (12) is locally reduced at the position where the space between the outer edge (18) of the flange (14) and the portion (15) of the cover part (13) covering the outer edge (18) is locally enlarged.

9. Heater assembly (10) according to any of claims 1-3, comprising a single safety opening (22, 23), wherein the main part (12) has an outwardly bent flange (14) at a level of the open side thereof, wherein a portion (15) of the cover part (13) is arranged for covering an outer edge (18) of the flange (14), and wherein an annular space is present between the outer edge (18) of the flange (14) and the portion (15) of the cover part (13) covering the outer edge (18) for forming the safety opening (22, 23) at a position between the main part (12) and the cover part (13).

10. Heater assembly (10) according to any of claims 1-3, comprising at least one group (21) of at least two safety openings (22, 23) which are located in a similar peripheral area of the heater assembly (10), wherein the position of one of the safety openings (22, 23) of a group (21) is one of a position in the main part (12), a position in the cover part (13), and a position between the main part (12) and the cover part (13), and wherein the position of another of the safety openings (22, 23) of the same group (21) is another of a position in the main part (12), a position in the cover part (13), and a position between the main part (12) and the cover part (13).

11. Heater assembly (10) according to any of claims 1-10, wherein the main part (12) and the cover part (13) are joined in a crimp connection.

12. Heater assembly (10) according to claim 11 insofar as dependent on claim 1, 2, 3, 4, 5 or 10, wherein the main part (12) has an outwardly bent flange (14) at a level of the open side thereof, and wherein an outer peripheral portion (15) of the cover part (13) is bent around the flange (14) of the main part (12).

13. Heater assembly (10) according to claim 11 insofar as dependent on any of claims 6-9, wherein an outer peripheral portion (15) of the cover part (13) is bent around the flange (14) of the main part (12).

14. Heater assembly (10) according to any of claims 1-13, comprising an annular sealing element (17) which is positioned in the sealing area (16), one portion of the annular sealing element (17) contacting the main part (12), and another portion of the annular sealing element (17) contacting the cover part (13).

15. Domestic appliance (1), comprising a heater assembly (10) according to any of claims 1-14 for heating fluid.

## Patentansprüche

1. Heizanordnung (10) zur Verwendung in einem Haushaltsgerät (1), umfassend einen Hauptteil (12), welcher im Allgemeinen becherförmig ist und eine offene Seite aufweist, und einen Deckelteil (13), welcher starr mit dem Hauptteil (12) verbunden ist, um die offene Seite des Hauptteils (12) abzudecken, wobei der Hauptteil (12) und der Deckelteil (13) einen Heizraum (11) zum Aufnehmen von Flüssigkeit, welche in der Heizanordnung (10) erhitzt werden soll, umschließen, und der Hauptteil (12) und der Deckelteil (13) in einem Dichtungsbereich (16), welcher sich an einer Position befindet, um den Heizraum (11) zu umgeben, abdichtend miteinander verbunden sind, **dadurch gekennzeichnet, dass** an einer Position, welche mehr an der Außenseite der Heizanordnung (10) liegt als der Dichtungsbereich (16), wenn von dem Heizraum (11) aus betrachtet, die Heizanordnung (10) mit zumindest einer Sicherheitsöffnung (22, 23) versehen ist, um Fluidum aus dem Heizraum (11) zu ermöglichen, dadurch in einem erzwungenen Sicherheitszustand der Heizanordnung (10) zu fließen, wobei in diesem Zustand zumindest ein Fluidumdurchgang zwischen dem Hauptteil (12) und dem Deckelteil (13) in dem Dichtungsbereich (16) vorhanden ist.

2. Heizanordnung (10) nach Anspruch 1, wobei die Position der zumindest einen Sicherheitsöffnung (22, 23) eine von einer Position in dem Hauptteil (12), einer Position in dem Deckelteil (13) und einer Position zwischen dem Hauptteil (12) und dem Deckelteil (13) ist.

3. Heizanordnung (10) nach Anspruch 1 oder 2, wobei die zumindest eine Sicherheitsöffnung (22, 23) angeordnet ist, um zumindest einen direkten Zugang auf freien Raum außerhalb der Heizanordnung (10) bereitzustellen.

4. Heizanordnung (10) nach einem der Ansprüche 1-3, wobei die zumindest eine Sicherheitsöffnung (22, 23) als ein Loch (20) in dem Deckelteil (13) bereitgestellt ist, wobei das Loch (20) hinter einem Abschnitt des mit dem Dichtungsbereich (16) assoziierten Deckelteils (13) positioniert ist, wenn von einer Mittelachse des Deckelteils (13) betrachtet.

5. Heizanordnung (10) nach einem der Ansprüche 1-3, wobei die zumindest eine Sicherheitsöffnung (22, 23) als ein Loch in dem Hauptteil (12) bereitgestellt ist, wobei das Loch hinter einem Abschnitt des mit dem Dichtungsbereich (16) assoziierten Hauptteils (12) positioniert ist, wenn von einer Mittelachse des Hauptteils (12) betrachtet.

6. Heizanordnung (10) nach einem der Ansprüche 1-3, wobei der Hauptteil (12) einen nach außen gebogenen Flansch (14) an einer Stufe der offenen Seite davon aufweist, wobei ein Abschnitt des Flansches (14) mit dem Dichtungsbereich (16) assoziiert ist, und wobei die zumindest eine Sicherheitsöffnung (22, 23) als ein Loch in dem Flansch (14) bereitgestellt ist, wobei das Loch hinter dem Abschnitt des mit dem Dichtungsbereich (16) assoziierten Flansches (14) positioniert ist, wenn von einer Mittelachse des Hauptteils (12) betrachtet.

7. Heizanordnung (10) nach einem der Ansprüche 1-3, wobei der Hauptteil (12) einen nach außen gebogenen Flansch (14) an einer Stufe der offenen Seite davon aufweist, wobei ein Abschnitt (15) des Deckelteils (13) angeordnet ist, um eine äußere Kante(18) des Flansches (14) abzudecken, und wobei, zumindest in einem Randbereich entlang der äußeren Kante (18) des Flansches (14), ein Raum zwischen der äußeren Kante (18) des Flansches (14) und dem Abschnitt (15) des Deckelteils (13), welcher die äußere Kante (18) abdeckt, lokal vergrößert ist, um die zumindest eine Sicherheitsöffnung (22, 23) an einer Position zwischen dem Hauptteil (12) und dem Deckelteil (13) zu bilden.

8. Heizanordnung (10) nach Anspruch 7, wobei ein Durchmesser der äußeren Kante (18) des Flansches (14) des Hauptteils (12) an der Position, an welcher der Raum zwischen der äußeren Kante (18) des Flansches (14) und dem Abschnitt (15) des Deckelteils (13), welcher die äußere Kante (18) abdeckt, lokal vergrößert ist, lokal verkleinert ist.

9. Heizanordnung (10) nach einem der Ansprüche 1-3, umfassend eine einzelne Sicherheitsöffnung (22, 23), wobei der Hauptteil (12) einen nach außen gebogenen Flansch (14) an einer Stufe der offenen Seite davon aufweist, wobei ein Abschnitt (15) des Deckelteils (13) angeordnet ist, um eine äußere Kante(18) des Flansches (14) abzudecken, und wobei ein ringförmiger Raum zwischen der äußeren Kante (18) des Flansches (14) und dem Abschnitt (15) des Deckelteils (13), welcher die äußere Kante (18) abdeckt, vorhanden ist, um die Sicherheitsöffnung (22, 23) an einer Position zwischen dem Hauptteil (12) und dem Deckelteil (13) zu bilden.

10. Heizanordnung (10) nach einem der Ansprüche 1-3, umfassend zumindest eine Gruppe (21) von zumindest zwei Sicherheitsöffnungen (22, 23) welche sich in einem ähnlichen Randbereich der Heizanordnung (10) befinden, wobei die Position von einer von den Sicherheitsöffnungen (22 ,23) von einer Gruppe (21) eine von einer Position in dem Hauptteil (12), einer Position in dem Deckelteil (13) und einer Position zwischen dem Hauptteil (12) und dem Deckelteil (13) ist, und wobei die Position einer weiteren von den Sicherheitsöffnungen (22, 23) von derselben Gruppe (21) eine weitere von einer Position in dem Hauptteil (12), einer Position in dem Deckelteil (13) und einer Position zwischen dem Hauptteil (12) und dem Deckelteil (13) ist.

11. Heizanordnung (10) nach einem der Ansprüche 1-10, wobei der Hauptteil (12) und der Deckelteil (13) in einer Crimpverbindung verbunden sind.

12. Heizanordnung (10) nach Anspruch 11 insofern, als abhängig von Anspruch 1, 2, 3, 4, 5 oder 10, wobei der Hauptteil (12) einen nach außen gebogenen Flansch (14) an einer Stufe der offenen Seite davon aufweist, und wobei ein äußerer Randabschnitt (15) des Deckelteils (13) rund um den Flansch (14) des Hauptteils (12) gebogen ist.

13. Heizanordnung (10) nach Anspruch 11 insofern, als abhängig von einem der Ansprüche 6-9, wobei ein äußerer Randabschnitt (15) des Deckelteils (13) rund um den Flansch (14) des Hauptteils (12) gebogen ist.

14. Heizanordnung (10) nach einem der Ansprüche 1-13, umfassend ein ringförmiges Dichtungselement (17), welches in dem Dichtungsbereich (16) positioniert ist, wobei ein Abschnitt des ringförmigen Dichtungselements (17) in Kontakt mit dem Hauptteil (12) steht, und ein weiterer Abschnitt des ringförmigen Dichtungselements (17) in Kontakt mit dem Deckelteil (13) steht.

15. Haushaltsgerät (1), umfassend eine Heizanordnung (10) nach einem der Ansprüche 1-14 zum Erhitzen von Flüssigkeit.

## Revendications

1. Ensemble chauffant (10) à utiliser dans un appareil ménager (1), comprenant une partie principale (12) généralement en forme de coupe et ayant un côté ouvert, et une partie de recouvrement (13) qui est reliée de manière fixe à la partie principale (12) pour recouvrir le côté ouvert de la partie principale (12), la partie principale (12) et la partie de recouvrement (13) enfermant un espace de chauffage (11) pour la réception de fluide à chauffer dans un ensemble chauffant (10), et la partie principale (12) et la partie de recouvrement (13) étant couplées de manière étanche l'une à l'autre dans une zone d'étanchéité (16) qui est à une position pour entourer l'espace de chauffage (11), **caractérisé en ce qu'**à une position qui est plus à l'extérieur de l'ensemble chauffant (10) que la zone d'étanchéité (16), vu depuis l'espace de chauffage (11), l'ensemble chauffant (10) est doté d'au moins une ouverture de sécurité (22, 23) pour permettre à un fluide de l'espace de chauffage (11) de s'écouler à travers dans une condition de sécurité forcée de l'ensemble chauffant (10) dans laquelle condition au moins un passage de fluide est présent entre la partie principale (12) et la partie de recouvrement (13) dans la zone d'étanchéité (16).

2. Ensemble chauffant (10) selon la revendication 1, dans lequel la position de l'au moins une ouverture de sécurité (22, 23) est une parmi une position dans la partie principale (12), une position dans la partie de recouvrement (13), et une position entre la partie principale (12) et la partie de recouvrement (13).

3. Ensemble chauffant (10) selon la revendication 1 ou 2, dans lequel l'au moins une ouverture de sécurité (22, 23) est agencée pour fournir un accès direct à l'espace libre à l'extérieur de l'ensemble chauffant (10).

4. Ensemble chauffant (10) selon l'une quelconque des revendications 1-3, dans lequel l'au moins une ouverture de sécurité (22, 23) est prévue en tant que trou (20) dans la partie de recouvrement (13), le trou (20) étant positionné au-delà d'une portion de la partie de recouvrement (13) associée à la zone d'étanchéité (16), vu depuis un axe central de la partie de recouvrement (13).

5. Ensemble chauffant (10) selon l'une quelconque des revendications 1-3, dans lequel l'au moins une ouverture de sécurité (22, 23) est prévue en tant que trou dans la partie principale (12), le trou étant positionné au-delà d'une portion de la partie principale (12) associée à la zone d'étanchéité (16), vu depuis un axe central de la partie principale (12).

6. Ensemble chauffant (10) selon l'une quelconque des revendications 1-3, dans lequel la partie principale (12) a une bride courbée vers l'extérieur (14) à un niveau du côté ouvert de celle-ci, dans lequel une portion de la bride (14) est associée à la zone d'étanchéité (16), et dans lequel l'au moins une ouverture de sécurité (22, 23) est prévue en tant que trou dans la bride (14), le trou étant positionné au-delà de la portion de la bride (14) associée à la zone d'étanchéité (16), vu depuis un axe central de la partie principale (12).

7. Ensemble chauffant (10) selon l'une quelconque des revendications 1-3, dans lequel la partie principale (12) a une bride courbée vers l'extérieur (14) à un niveau du côté ouvert de celle-ci, dans lequel une portion (15) de la partie de recouvrement (13) est agencée pour recouvrir un bord extérieur (18) de la bride (14), et dans lequel, au moins dans une zone périphérique le long du bord extérieur (18) de la bride (14), un espace entre le bord extérieur (18) de la bride (14) et la portion (15) de la partie de recouvrement (13) recouvrant le bord extérieur (18) est agrandi localement pour former l'au moins une ouverture de sécurité (22, 23) à une position entre la partie principale (12) et la partie de recouvrement (13).

8. Ensemble chauffant (10) selon la revendication 7, dans lequel un diamètre du bord extérieur (18) de la bride (14) de la partie principale (12) est localement réduit à la position où l'espace entre le bord extérieur (18) de la bride (14) et la portion (15) de la partie de recouvrement (13) recouvrant le bord extérieur (18) est agrandi localement.

9. Ensemble chauffant (10) selon l'une quelconque des revendications 1-3, comprenant une seule ouverture de sécurité (22, 23), dans lequel la partie principale (12) a une bride courbée vers l'extérieur (14) à un niveau du côté ouvert de celle-ci, dans lequel une portion (15) de la partie de recouvrement (13) est agencée pour recouvrir un bord extérieur (18) de la bride (14), et dans lequel un espace annulaire est présent entre le bord extérieur (18) de la bride (14) et la portion (15) de la partie de recouvrement (13) recouvrant le bord extérieur (18) pour former l'ouverture de sécurité (22, 23) à une position entre la partie principale (12) et la partie de recouvrement (13).

10. Ensemble chauffant (10) selon l'une quelconque des revendications 1-3, comprenant au moins un groupe (21) d'au moins deux ouvertures de sécurité (22, 23) qui sont situées dans une zone périphérique similaire de l'ensemble chauffant (10), dans lequel la position d'une des ouvertures de sécurité (22, 23) d'un groupe (21) est une parmi une position dans la partie principale (12), une position dans la partie de recouvrement (13), et une position entre la partie principale (12) et la partie de recouvrement (13), et dans lequel la position d'une autre des ouvertures de sécurité (22, 23) du même groupe (21) est une autre parmi une position dans la partie principale (12), une position dans la partie de recouvrement (13), et une position entre la partie principale (12) et la partie de recouvrement (13).

11. Ensemble chauffant (10) selon l'une quelconque des revendications 1-10, dans lequel la partie principale (12) et la partie de recouvrement (13) sont jointes dans une connexion par sertissage.

12. Ensemble chauffant (10) selon la revendication 11 dans la mesure où elle dépend de la revendication 1, 2, 3, 4, 5 ou 10, dans lequel la partie principale (12) a une bride courbée vers l'extérieur (14) à un niveau du côté ouvert de celle-ci, et dans lequel une portion périphérique extérieure (15) de la partie de recouvrement (13) est courbée autour de la bride (14) de la partie principale (12).

13. Ensemble chauffant (10) selon la revendication 11 dans la mesure où elle dépend de l'une quelconque des revendications 6-9, dans lequel une portion périphérique extérieure (15) de la partie de recouvrement (13) est courbée autour de la bride (14) de la partie principale (12).

14. Ensemble chauffant (10) selon l'une quelconque des revendications 1-13, comprenant un élément d'étanchéité annulaire (17) qui est positionné dans la zone d'étanchéité (16), une portion de l'élément d'étanchéité annulaire (17) en contact avec la partie principale (12), et une autre portion de l'élément d'étanchéité annulaire (17) en contact avec la partie de recouvrement (13).

15. Appareil ménager (1), comprenant un ensemble chauffant (10) selon l'une quelconque des revendications 1-14 pour le chauffage de fluide.
